# NOUVEAU FASCICULE DE BREVET EUROPEEN

(11) **EP 0 177 378 B2**
(45) Date de publication et mention de la décision concernant l'opposition: **03.05.1995**
(45) Mention de la délivrance du brevet: 08.11.1989
(21) Numéro de dépôt: 85401635.9
(22) Date de dépôt: 13.08.1985
(51) Int. Cl.: C08F 210/02, C08F 2/00

(54) **Nouveau procédé de fabrication de terpolymères radicalaires de l'éthylène et de copolymères radicalaires de l'éthylène**
Verfahren zur Herstellung von Radikal-Terpolymeren von Äthylen und Radikal-Copolymeren von Äthylen
Process for the manufacture of radical ethylene terpolymers and radical ethylene copolymers

(30) Priorité: 23.08.1984 FR 8413138
(43) Date de publication de la demande: 09.04.1986
(73) Titulaire: ELF ATOCHEM S.A., 92800 Puteaux (FR)
(72) Inventeur: Gloriod, Pierre, F-76170 Lillebonne (FR); Audureau, Joel, F-62290 Noeux Les Mines (FR); Pellegrini, Maurice, F-62800 Lievin (FR)
(74) Mandataire: Warcoin, Jacques

(56) Documents cités:
- DE-A- 3 202 545
- FR-A- 2 498 609
- GB-A- 578 992
- Ullmanns Encyclopädie der Technischen Chemie, Band 19, 1980, pp 169-170

## Description

La présente invention concerne un nouveau procédé de fabrication de terpolymères de l'éthylène ainsi que de copolymères de l'éthylène.

Plus précisément, l'invention concerne un nouveau procédé de fabrication de terpolymères radicalaires de l'éthylène comprenant des motifs dérivés d'un (méth)acrylate et des motifs dérivés de l'anhydride maléique, ainsi que de copolymères radicalaires de l'éthylène comprenant des motifs dérivés d'un (méth)acrylate et de copolymères radicalaires de l'éthylène comprenant des motifs dérivés de l'anhydride maléique.

Dans sa demande de brevet français n° 2 498 609, la demanderesse a décrit un procédé de fabrication de terpolymères de l'éthylène comprenant des motifs dérivés d'un ester (méth)acrylique et des motifs dérivés de l'anhydride maléique, par copolymérisation à haute pression, en présence d'au moins un initiateur de radicaux libres, d'un mélange d'éthylène, d'ester (méth)acrylique et d'anhydride maléique. Dans le procédé décrit dans le brevet n° 2 498 609 l'introduction des monomères ester (méth)acrylique et anhydride maléique dans le réacteur de polymérisation est effectuée par pompage sous pression d'une solution d'anhydride maléique dans l'ester (méth)acrylique, mélange de cette solution avec le flux d'éthylène et homogénéisation de ce mélange avant son alimentation dans le réacteur de polymérisation, ladite homogénéisation étant effectuée dans un homogénéiseur du type Venturi puis dans un homogénéiseur à spirale.

La demanderesse a découvert, d'une façon surprenante, que dans un tel procédé de fabrication de terpolymères de l'éthylène comprenant des motifs dérivés d'un ester (méth)acrylique et des motifs dérivés de l'anhydride maléique, les monomères ester (méth)acrylique et anhydride maléique pouvaient être introduits dans le réacteur de polymérisation en étant alimentés à l'aspiration d'un compresseur secondaire sans qu'il soit nécessaire de faire passer ensuite le mélange de ces monomères avec l'éthylène par un dispositif d'homogénéisation, ce qui présente des avantages considérables.

La présente invention fournit donc un procédé de fabrication de terpolymères radicalaires de l'éthylène comprenant des motifs dérivés d'au moins un (méth)acrylate d'alkyle (le groupe alkyle possédant de 1 à 6 atomes de carbone) et des motifs dérivés de l'anhydride maléique, par copolymérisation, en présence d'au moins un initiateur de radicaux libres, d'un mélange d'éthylène, de (méth)acrylate et d'anhydride maléique dans un dispositif comprenant un compresseur primaire dont la pression de refoulement est comprise entre 200 et 300 bars relié à un compresseur secondaire qui est relié directement à un réacteur de polymérisation, dans lequel l'éthylène frais est alimenté à l'aspiration dudit compresseur primaire et ladite copolymérisation est effectuée dans ledit réacteur de polymérisation sous une pression comprise entre 1000 et 2500 bars et à une température comprise entre 140 et 280 °C, caractérisé par le fait que l'alimentation du (méth)acrylate et de l'anhydride maléique dans ledit réacteur de polymérisation est effectuée par introduction d'une solution d'anhydride maléique dans le (méth)acrylate à l'aspiration dudit compresseur secondaire, en l'absence de tout dispositif d'homogénéisation.

De façon inattendue, malgré l'absence d'un dispositif d'homogénéisation des monomères, la copolymérisation se réalise très bien selon la présente invention.

Les terpolymères pouvant être fabriqués selon le procédé de la présente invention comprennent:
- 50 à 99,2% en poids de motifs dérivés de l'éthylène
- 0,5 à 40% en poids de motifs dérivés d'un (méth)acrylate
- 0,3 à 10% en poids de motifs dérivés de l'anhydride maléique.

Leur indice de fluidité est généralement compris entre 0,1 et 500 dg/min.

Le réacteur de polymérisation utilisable selon l'invention peut être un réacteur tubulaire ou un réacteur autoclave et il peut comprendre une ou plusieurs zones.

Comme cela a été mentionné plus haut, le compresseur secondaire est relié directement au réacteur de polymérisation; sa pression de refoulement est donc égale à celle du réacteur, aux pertes de charge près.

Les initiateurs de radicaux libres utilisables selon l'invention sont les initiateurs utilisés de façon classique dans de tels procédés de polymérisation haute pression, tels par exemple le peroxydicarbonate de 2-éthylhexyle, le peroxyde de diterbutyle, le perbenzoate de tertiobutyle, l'éthyl-2-perhexanoate de terbutyle et le peroxyde d'isopropanoyle.

On peut utiliser simultanément plusieurs initiateurs dans une même zone du réacteur.

Comme cela est bien connu de l'homme de l'art, le choix du ou des initiateurs est fonction de la température de polymérisation.

De façon connue, on peut introduire dans le mélange réactionnel un agent de transfert pour contrôler la masse moléculaire du produit obtenu De tels agents de transfert sont par exemple les alcanes, tels le propane et le butane, les oléfines, en particulier les α-oléfines, les aldéhydes, les cétones.

Selon un mode de réalisation du procédé de l'invention pour la fabrication de terpolymères radicalaires de l'éthylène comprenant des motifs dérivés d'un (méth)acrylate et des motifs dérivés de l'anhydride maléique, de l'éthylène frais est alimenté à l'aspiration d'un compresseur primaire dont la pression de refoulement est comprise entre 200 et 300 bars, une solution d'anhydride maléique dans du (méth)acrylate est alimentée à l'aspiration du compresseur secondaire où elle se mélange avec le flux d'éthylène frais et le mélange des trois monomères est introduit via le compresseur secondaire dans le réacteur où la polymérisation est effectuée en présence d'au moins un initiateur de radicaux libres à une température comprise entre 140 et 280 °C et une pression comprise entre 1000 et 2500 bars.

Le fond du réacteur est muni d'une vanne de détente permettant d'abaisser la pression à environ 250 bars. Le mélange du terpolymère obtenu fondu et des monomères non consommés traverse ladite vanne de détente et est envoyé dans un séparateur moyenne pression. Le terpolymère est recueilli au fond dudit séparateur tandis que les monomères gazeux non consommés sont recyclés, après passage à travers une trémie de dégraissage, à l'aspiration du compresseur secondaire. Le fond de la trémie moyenne pression peut être muni d'une vanne de détente reliée à une trémie basse pression au fond de laquelle on recueille le terpolymère, les retours de la trémie basse pression étant recyclés à l'aspiration du compresseur primaire.

Les terpolymères fabriqués selon la présente invention trouvent des applications multiples, notamment dans les compositions pour produits d'étanchéité, l'enduction de métaux, les colles thermofusibles, décrites dans les brevets français 2 505 731, 2 505 859 et 2 504 933 de la demanderesse.

La présente invention fournit également un procédé permettant de fabriquer des copolymères radicalaires de l'éthylène comprenant des motifs dérivés d'un second monomère choisi parmi les (méth)acrylates et l'anhydride maléique, par copolymérisation, en présence d'au moins un initiateur de radicaux libres, d'un mélange d'éthylène et dudit second monomère dans un dispositif comprenant un compresseur primaire dont la pression de refoulement est comprise entre 200 et 300 bars relié à un compresseur secondaire qui est relié directement à un réacteur de polymérisation, dans lequel l'éthylène frais est alimenté à l'aspiration dudit compresseur primaire et ladite copolymérisation est effectuée dans ledit réacteur de polymérisation à une pression comprise entre 1000 et 2500 bars et à une température comprise entre 140 et 280 °C, caractérisé par le fait que l'alimentation dudit second monomère dans ledit réacteur de polymérisation est effectuée par introduction de ce second monomère à l'aspiration dudit compresseur secondaire, en l'absence de tout dispositif d'homogénéisation.

Le second monomère peut si nécessaire être introduit selon la présente invention à l'aspiration du compresseur secondaire en solution dans un solvant qui doit satisfaire aux exigences suivantes:
- être un bon solvant dudit second monomère
- avoir une constante de transfert vis à vis de l'éthylène négligeable
- avoir un point d'ébullition compris entre 100 et 250 °C.

Les initiateurs de radicaux libres utilisables pour la fabrication des copolymères selon l'invention sont les mêmes que ceux mentionnés ci-dessus pour la fabrication des terpolymères.

Le procédé de la présente invention permet de fabriquer des copolymères radicalaires comprenant 60 à 99,5% en poids de motifs dérivés de l'éthyléne et 0,5 à 40% en poids de motifs dérivés d'un (méth)acrylate ainsi que des copolymères radicalaires comprenant 90 à 99,7% en poids de motifs dérivés de l'éthylène et 0,3 à 10% en poids de motifs dérivés de l'anhydride maléique.

Les exemples suivants illustrent l'invention de façon non limitative.

### Exemple 1

Préparation d'un terpolymère éthylène-acrylate d'éthyle-anhydride maléique

Dans le dispositif décrit ci-dessus, on injecte de l'éthylène à l'aspiration du compresseur primaire et une solution à 300 g/l d'anhydride maléique dans de l'acrylate d'éthyle à l'aspiration du compresseur secondaire à 250 bars. La solution d'anhydride maléique, avec l'éthylène, passe ensuite directement dans un réacteur où la polymérisation s'effectue sous une pression de 1900 bars à une température de 225 °C. La conversion est de 10%.

On obtient une résine terpolymère contenant 3% en poids de motifs dérivés de l'anhydride maléique et 7% en poids de motifs dérivés de l'acrylate d'éthyle et ayant un indice de fluidité de 7dg/min.

Avec un débit de 30 t/h d'éthylène à l'entrée du réacteur et 300 l/h de solution acrylique à l'aspiration du compresseur secondaire, on a une production de 3000 kg/h de résine.

### Exemple 2

Préparation d'un copolymère éthylène-acrylate d'éthyle
Dans le dispositif décrit ci-dessus, on injecte de l'éthylène à l'aspiration du compresseur primaire et de l'acrylate d'éthyle à l'aspiration du compresseur secondaire à 250 bars. La solution d'acrylate. avec l'éthylène, passe ensuite directement dans le réacteur de polymérisation travaillant sous une pression de 160 bars à une température de 250 °C.

On obtient une résine copolymère contenant 20% en poids de motifs dérivés de l'acrylate d'éthyle et ayant un indice de fluidité de 1 dg/min

Avec un débit de 30 t/h d'éthylène à l'entrée du réacteur et 900 l/h d'acrylate à l'aspiration du compresseur secondaire, on obtient 4,2 t/h de résine.

## Revendications

1. Procédé de fabrication de terpolymères radicalaires de l'éthylène comprenant 50 à 99,2% en poids de motifs dérivés de l'éthylène, 0,5 à 40% en poids de motifs dérivés d'au moins un acrylate d'alkyle ou méthacrylate d'alkyle (les groupes alkyles possédant de 1 à 6 atomes de carbone) et 0,3 à 10% en poids de motifs dérivés de l'anhydride maléique, par copolymérisation, en présence d'au moins un initiateur de radicaux libres d'un mélange d'éthylène, d'acrylate et/ou méthacrylate et d'anhydride maléique dans un dispositif comprenant un compresseur primaire dont la pression de refoulement est comprise entre 200 et 300 bars relié à un compresseur secondaire qui est relié directement à un réacteur de polymérisation dans lequel l'éthylène frais est alimenté à l'aspiration dudit compresseur primaire et ladite copolymérisation est effectuée dans ledit réacteur de polymérisation sous une pression comprise entre 1000 et 2500 bars et à une température comprise entre 140 et 280°C, caractérisé par le fait que l'alimentation de l'acrylate ou le méthacrylate et de l'anhydride maléique dans ledit réacteur de polymérisation est effectuée par introduction d'une solution d'anhydride maléique dans l'acrylate ou le méthacrylate à l'aspiration dudit compresseur secondaire, en l'absence de tout dispositif d'homogénéisation.

2. Procédé de fabrication de copolymères radicalaires de l'éthylène comprenant des motifs dérivés d'un second monomère choisi parmi les acrylates ou méthacrylates et l'anhydride maléique, par copolymérisation, en présence d'au moins un initiateur de radicaux libres, d'un mélange d'éthylène et dudit second monomère dans un dispositif comprenant un compresseur primaire dont la pression de refoulement est comprise entre 200 et 300 bars relié à un compresseur secondaire qui est relié directement à un réacteur de polymérisation, dans lequel l'éthylène frais est alimenté à l'aspiration dudit compresseur primaire et ladite copolymérisation est effectuée dans ledit réacteur de polymérisation sous une pression comprise entre 1000 et 2500 bars et à une température comprise entre 140 et 280°C, caractérisé par le fait que l'alimentation dudit second monomère dans ledit réacteur de polymérisation est effectuée par introduction de ce second monomère à l'aspiration dudit compresseur secondaire, en l'absence de tout dispositif d'homogénéisation.

3. Procédé selon la revendication 2 dans lequel ledit second monomère est un acrylate ou le méthacrylate dont la teneur dans le copolymère est comprise entre 0,5 et 40% en poids, la teneur en éthylène étant de 60 à 99,5% en poids.

4. Procédé selon la revendication 2 dans lequel ledit second monomère est l'anhydride maléique dont la teneur dans le copolymère est comprise entre 0,3 et 10% en poids, la teneur en éthylène étant de 90 à 99,7% en poids.

## Claims

1. A process for the manufacture of radical ethylene terpolymers comprising 50 to 99.2 % by weight of moieties derived from ethylene, 0.5 to 40 % by weight of moieties derived from at least one alkyl acrylate or alkyl methacrylate (the alkyl groups containing from 1 to 6 carbon atoms) and 0.3 to 10 % by weight of moieties derived from maleic anhydride, by copolymerization, in the presence of at least one free-radical initiator, of a mixture of ethylene, acrylate and/or methacrylate and maleic anhydride in a device comprising a primary compressor the delivery pressure of which is between 200 and 300 bars connected to a secondary compressor which is connected directly to a polymerization reactor, in which fresh ethylene is fed at the suction of the said primary compressor and the said copolymerization is carried out in the said polymerization reactor at a pressure between 1000 and 2500 bars and at a temperature of between 140 and 280°C, characterized in that the feeding of the acrylate or the methacrylate and maleic anhydride into the said polymerization reactor is effected by introducing a solution of maleic anhydride in the acrylate or the methacrylate into the suction of the said secondary compressor, in the absence of any device for homogenization.

2. A process for the manufacture of radical ethylene copolymers comprising moieties derived from a second monomer chosen from acrylates or methacrylates and maleic anhydride, by copolymerization, in the presence of at least one free-radical initiator, of a mixture of ethylene and the said second monomer in a device comprising a primary compressor the delivery pressure of which is between 200 and 300 bars connected to a secondary compressor which is connected directly to a polymerization reactor, in which fresh ethylene is fed at the suction of the said primary compressor and the said copolymerization is carried out in the said polymerization reactor at a pressure between 1000 and 2500 bars and at a temperature between 140 and 280°C, characterized in that the feeding of the said second monomer into the said polymerization reactor is effected by introducing this second monomer at the suction of the said secondary compressor (as amended above).

3. A process according to Claim 2, in which the said second monomer is an acrylate or methacrylate the content of which in the copolymer is between 0.5 and 40 % by weight, the ethylene content being 60 to 99.5 % by weight.

4. A process according to Claim 2, in which the said second monomer is maleic anhydride, the content of which in the copolymer is between 0.3 and 10 % by weight, the ethylene content being 90 to 99.7 % by weight.

## Patentansprüche

1. Verfahren zur Herstellung von Radikal-Terpolymeren des Ethylens enthaltend 50 - 99,2 Gewichts-% von dem Ethylen abgeleitete Einheiten, 0,5 - 40 Gewichts-% Einheiten abgeleitet von wenigstens einem Alkylacrylat oder Methacrylat (wobei die Alkylgruppen 1 - 6 Kohlenstoffatome enthalten) und 0,3 - 10 Gewichts-% Einheiten abgeleitet von Maleinsäureanhydrid, durch Copolymerisation in Gegenwart wenigstens eines Bildners von freien Radikalen, einer Mischung des Ethylens, des Acrylats und/oder Methacrylats und des Maleinsäureanhydrids in einer Vorrichtung, umfassend einen ersten Kompressor, in dem der Förderdruck von 200 bis 300 bar beträgt, verbunden mit einem zweiten Kompressor, der direkt mit einem Polymerisationsreaktor verbunden ist, in den das frische Ethylen zugeführt wird durch die Saugwirkung des ersten Kompressors und in welchem die genannte Copolymerisation bewirkt wird in dem genannten Polymerisationsreaktor unter einem Druck von 1000 bis 2500 bar und bei einer Temperatur von 140 bis 280 °C, dadurch gekennzeichnet, daß die Zufuhr des Acrylats oder Methacrylats und des Maleinsäureanhydrids in den genannten Polymerisationsreaktor bewirkt wird durch Einführung einer Lösung von Maleinsäureanhydrid in dem Acrylat oder dem Methacrylat durch die Saugwirkung des genannten zweiten Kompressors bei vollständiger Abwesenheit einer Homogenisierungsvorrichtung.

2. Verfahren zur Herstellung von Radikal-Copolymeren des Ethylens, enthaltend Einheiten abgeleitet von einem zweiten Monomer ausgewählt unter den Acrylaten oder Methacrylaten und dem Maleinsäureanhydrid durch Copolymerisation, in Gegenwart wenigstens eines Bildners von freien Radikalen, einer Mischung des Ethylens und des genannten zweiten Monomers in einer Vorrichtung umfassend einen ersten Kompressor in dem der Förderdruck von 200 bis 300 bar beträgt, verbunden mit einem zweiten Kompressor, der direkt verbunden ist mit einem Polymerisationsreaktor, in den das frische Ethylen zugeführt wird durch die Saugwirkung des genannten ersten Kompressors und die genannte Copolymerisation bewirkt wird in dem genannten Polymerisationsreaktor unter einem Druck von 1.000 bis 2.500 bar und bei einer Temperatur von 140 bis 280 °C, dadurch gekennzeichnet, daß die Zufuhr des genannten zweiten Monomeren in den genannten Polymerisationsreaktor bewirkt wird durch Einführung dieses zweiten Monomers durch die Saugwirkung des genannten zweiten Kompressors bei vollständiger Abwesenheit einer Homogenisierungsvorrichtung.

3. Verfahren gemäß dem Anspruch 2, bei dem das genannte zweite Monomer ein Acrylat oder Methacrylat ist, deren Gehalt in dem Copolymer von 0,5 bis 40 Gewichts-% beträgt, wobei der Gehalt an Ethylen 60 bis 99,5 Gewichts-% beträgt.

4. Verfahren nach Anspruch 2, bei dem das genannte zweite Monomer Maleinsäureanhydrid ist, dessen Gehalt in dem Copolymer von 0,3 bis 10 Gewichts-% beträgt, wobei der Gehalt an Äthylen 90 bis 99,7 Gewichts-% beträgt.
